Europäisches Patentamt

(19) European Patent Office

Office européen des brevets

(11) EP 1 223 417 A1

(12) DEMANDE DE BREVET EUROPEEN

(43) Date de publication:
17.07.2002 Bulletin 2002/29

(51) Int Cl.$^7$: G01K 11/20

(21) Numéro de dépôt: 01410123.2

(22) Date de dépôt: 27.09.2001

(84) Etats contractants désignés:
AT BE CH CY DE DK ES FI FR GB GR IE IT LI LU
MC NL PT SE TR
Etats d'extension désignés:
AL LT LV MK RO SI

(30) Priorité: 22.12.2000 FR 0016915

(71) Demandeur: Schneider Electric Industries SA
92500 Rueil-Malmaison (FR)

(72) Inventeurs:
• Moussanet, Roland, Schneider Electric
38050 Grenoble cedex 09 (FR)
• Perichon, Pierre, Schneider Electric
38050 Grenoble cedex 09 (FR)

(74) Mandataire: Tripodi, Paul et al
Schneider Electric Industries SA,
Service Protriété Industrielle - A7
38050 Grenoble Cedex 09 (FR)

(54) **Dispositif et procédé de traitement de signal et appareil électrique comportant un tel dispositif**

(57) Le dispositif de traitement d'un signal comporte des moyens de détermination pour fournir un signal (S2) de sortie ayant une valeur représentative d'une constante de temps (Ct) d'une partie d'un signal (S1) d'entrée ayant une forme (4) sensiblement exponentielle. Les moyens de détermination comportent des premiers moyens (8, 8A, 40, 41) d'intégration pour fournir un premier signal (S3, S3A) d'intégration représentatif de l'intégration du signal d'entrée (S1, S1A) dans deux sens opposés pendant des durées sensiblement égales. Des moyens (9, 44) d'extraction connectés aux premiers moyens (8, 8A) d'intégration fournissent une valeur représentative d'une constante de temps (Ct, S2) en fonction du premier signal (S3, S3A) d'intégration. Le procédé comporte des étapes d'intégration et d'extraction pour fournir la valeur représentative d'une constante de temps (Ct, S2).

FIG. 4

Printed by Jouve, 75001 PARIS (FR)

## Description

L'invention concerne un dispositif et un procédé de traitement d'un signal comportant des moyens de détermination pour fournir un signal de sortie ayant une valeur représentative d'une constante de temps d'une partie d'un signal d'entrée ayant une forme sensiblement exponentielle. L'invention concerne aussi un appareil électrique comportant au moins un conducteur électrique et au moins un capteur de température à matériau fluorescent ou luminescent disposé à proximité dudit conducteur électrique.

Les dispositifs de traitement connus destinés à donner une valeur représentative d'un signal de forme exponentielle utilisent généralement un système d'échantillonnage pour évaluer le signal en plusieurs points. Les valeurs des échantillons mesurés permettent alors de déterminer l'amplitude et la constante de temps du signal à la décroissance. Cependant, lorsque le signal est bruité ou comporte des perturbations, une telle méthode de mesure ne permet pas d'avoir des valeurs précises du signal d'entrée.

Lorsque le signal d'entrée est fourni par un capteur à matériau fluorescent ou luminescent, la forme du signal est sensiblement exponentielle décroissante et de faible amplitude. Ainsi, puisque le signal est faible, des perturbations risquent de se superposer au signal. Si des amplificateurs sont utilisés pour amplifier le signal, ces perturbations persistent et un signal de décalage dit signal offset peut être ajouté au signal amplifié. De telles altérations rendent difficile une mesure précise de certaines caractéristiques du signal, notamment l'extraction d'une grandeur représentative d'une constante de temps de la forme exponentielle.

L'invention a pour but un dispositif et un procédé de traitement d'un signal permettant une mesure précise d'une grandeur représentative d'une constante de temps d'une forme sensiblement exponentielle d'un signal ainsi qu'un apparcil comportant un tel dispositif.

Dans un dispositif selon l'invention, les moyens de détermination comportent :

- des premiers moyens d'intégration pour fournir un premier signal d'intégration représentatif de l'intégration du signal d'entrée dans un premier sens pendant une première durée prédéterminée et de l'intégration du signal d'entrée dans un second sens inversé par rapport au premier sens pendant une seconde durée prédéterminée succédant à la première durée et de valeur sensiblement égale à ladite première durée, et
- des moyens d'extraction connectés aux premiers moyens d'intégration pour fournir en fonction du premier signal d'intégration le signal de sortie ayant la valeur représentative d'une constante de temps d'une partie d'un signal ayant une forme sensiblement exponentielle.

Dans un mode de réalisation préférentiel, les moyens de détermination comportent des seconds moyens d'intégration pour fournir un second signal d'intégration représentatif de l'intégration du signal d'entrée dans un premier sens pendant une troisième durée prédéterminée différente de la première durée et commençant sensiblement en même temps, et de l'intégration du signal d'entrée dans un second sens inversé par rapport au premier sens pendant une quatrième durée prédéterminée succédant à la troisième durée et de valeur sensiblement égale à ladite troisième durée, les moyens d'extraction étant connectés aux premiers moyens d'intégration et aux seconds moyens d'intégration pour fournir ledit signal de sortie en fonction du premier signal d'intégration et du second signal d'intégration.

De préférence, le premier signal d'intégration et/ou le second signal d'intégration sont déterminés par au moins une durée d'intégration d'un signal de référence entre au moins une des valeurs du premier et/ou du second des signaux d'intégration après l'intégration pendant une seconde durée ou une quatrième durée et une valeur de référence déclenchant une fin d'intégration.

Avantageusement, les moyens d'extraction comportent des moyens pour déterminer le rapport entre le premier signal d'intégration et le second signal d'intégration, la valeur du signal de sortie étant déterminée en fonction dudit rapport.

De préférence, les moyens d'extraction comportent une table de valeurs pour attribuer des valeurs du signal de sortie en fonction du rapport entre le premier signal d'intégration et le second signal d'intégration.

De préférence, les moyens de détermination comportent des moyens de commutation pour commuter au moins une entrée des moyens d'intégration entre le signal d'entrée et un signal d'entrée inversé, et un signal de référence.

Dans un mode de réalisation particulier, le dispositif comporte des moyens d'amplification pour recevoir un signal de mesure et pour fournir le signal d'entrée aux moyens de détermination.

Dans un mode de réalisation particulier, le dispositif comporte des moyens de réception d'un signal lumineux connectés aux moyens d'amplification, le signal lumineux étant fourni par un capteur à matériau fluorescent ou luminescent.

Par exemple, le signal lumineux fourni par un capteur à matériau fluorescent ou luminescent peut être un signal représentatif d'une température.

Un appareil électrique selon l'invention, comportant au moins un conducteur électrique et au moins un capteur de température à matériau fluorescent ou luminescent disposé à proximité dudit conducteur électrique, comporte un dispositif de traitement tel que défini ci-dessus connecté audit capteur de température.

De préférence, une partie dudit au moins un conducteur électrique est réalisée en forme de shunt électrique et en ce que le matériau fluorescent ou luminescent du capteur est disposé sur la partie du conducteur en forme de shunt électrique.

Dans un mode de réalisation particulier, l'appareil électrique comporte :

- au moins un contact électrique en série avec ledit au moins un conducteur électrique, et
- des moyens de traitement de fonctions de déclenchement connectés en sortie du dispositif de traitement pour recevoir le signal de sortie ayant une valeur représentative d'une constante de temps, et connectés à un relais de déclenchement pour commander l'ouverture desdits contacts.

Dans un mode de réalisation préférentiel, ledit appareil est un disjoncteur électrique.

Dans un procédé de traitement d'un signal selon l'invention comportant une phase de détermination pour fournir une valeur représentative d'une constante de temps d'une partie d'un signal d'entrée ayant une forme sensiblement exponentielle, la phase de détermination comporte :

- une première étape d'intégration du signal d'entrée dans un premier sens pendant une première durée prédéterminée,
- une seconde étape d'intégration du signal d'entrée dans un second sens inversé par rapport au premier sens pendant une seconde durée prédéterminée sensiblement égale à la première durée et succédant à la dite première étape, et
- une étape d'extraction pour fournir la valeur représentative d'une constante de temps en fonction du signal intégré par la première et la seconde étape d'intégration.

De préférence, la phase de détermination comporte :

- une troisième étape d'intégration du signal d'entrée dans un premier sens pendant une troisième durée prédéterminée différente de la première durée et commençant sensiblement en même temps que ladite première étape,
- une quatrième étape d'intégration du signal d'entrée dans un second sens inversé par rapport au premier sens pendant une quatrième durée prédéterminée sensiblement égale à la troisième durée et succédant à la dite troisième étape,

l'étape d'extraction fournissant la valeur représentative d'une constante de temps en fonction du signal intégré par la première et la seconde étape d'intégration et du signal intégré par la troisième et la quatrième étape d'intégration.

Avantageusement, l'étape d'extraction fournit la valeur représentative d'une constante de temps en fonction du rapport entre le signal intégré par 1a première et la seconde étape d'intégration et le signal intégré par la troisième et la quatrième étape d'intégration.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :

- la figure 1 illustre un exemple de signal à traiter par un dispositif ou procédé selon des modes de réalisation de l'invention ;
- la figure 2 représente un premier schéma d'un dispositif selon un mode de réalisation de l'invention ;
- les figures 3A, 3B et 3C représentent des signaux dans un dispositif selon un mode de réalisation de l'invention ;
- la figure 4 représente un second schéma d'un dispositif selon un mode de réalisation de l'invention ;
- la figure 5 représente un troisième schéma d'un dispositif selon un mode de réalisation de l'invention ;
- la figure 6 représente un premier schéma d'un appareil électrique selon un mode de réalisation de l'invention ;
- la figure 7 représente un second schéma d'un appareil électrique selon un mode de réalisation de l'invention ;
- la figure 8 représente un procédé de traitement selon un mode de réalisation de l'invention.

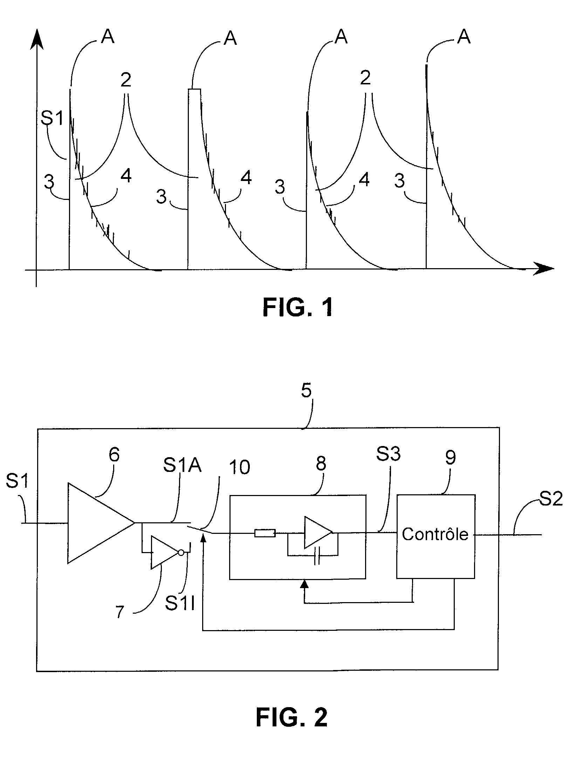

Un signal S1 représenté sur la figure 1 comporte des impulsions 2 ayant chacune une première partie 3 ascendante partant d'une valeur minimale jusqu'à une valeur maximale d'amplitude A et une seconde partie 4 décroissante de manière sensiblement exponentielle. Lorsque des mesures ou des informations portées par le signal 1 se trouvent dans une constante de temps de la partie décroissante 4, un dispositif de traitement permet de fournir un signal représentatif de la dite constante de temps.

La partie décroissante du signal S1 peut s'exprimer par la fonction suivante :

$$F1(t) = A.e^{-\frac{t}{Ct}} + Off \tag{1}$$

Dans cette expression A représente l'amplitude du signal, t représente le temps, Ct représente la constante de temps du signal à la décroissance, et Off représente une valeur de décalage pouvant être introduite notamment par un amplificateur.

Pour éliminer certaines irrégularités du signal, le signal est de préférence intégré pendant un temps prédéterminé. À la fin de l'intégration il est alors possible de déterminer la valeur de la constante de temps Ct. Cependant, une telle intégration risque d'intégrer aussi la valeur de décalage. Ainsi, dans un mode de réalisation de l'invention le signal à intégrer est intégré dans un premier temps dans un premier sens pendant un temps prédéterminé et dans un second sens inversé pendant un temps sensiblement le même.

Dans le mode réalisation de la figure 2, un dispositif de traitement 5 reçoit le signal S1 à mesurer et fournit un signal S2 représentatif d'une constante de temps à la décroissance du signal S1. Le signal S1 est amplifié par un amplificateur 6 qui fournit un signal S1A amplifié. Le signal S1A est appliqué à un inverseur 7 pour fournir un signal inversé S1I. Un premier intégrateur 8 reçoit successivement les signaux S1A et S1I puis fournit un signal d'intégration S3 à un circuit de contrôle 9 pour extraire le signal S2. Le circuit de contrôle 9 commande un commutateur 10 pour appliquer à l'entrée du premier intégrateur le signal dans un premier sens S1A ou le signal S1I qui est dans un second sens inversé par rapport au premier sens. Le circuit de contrôle 9 permet aussi de commander le fonctionnement de l'intégrateur, notamment en l'initialisant avant chaque impulsion du signal S1.

Lorsqu'un signal S1 est appliqué à l'entrée du dispositif de traitement 5, l'amplificateur amplifie le signal en risquant de superposer au signal amplifié un signal de décalage Off dit signal d'offset. Puisque dans l'équation F1(t) le signal Off est une constante, ce signal est pratiquement annulé par une première intégration dans un premier sens et une seconde intégration dans un sens opposé et de même durée.

L'intégration du signal de F1(t) peut s'exprimer par une fonction suivante :

$$F2(t) = \frac{1}{RC}\cdot\left(\int_{t0}^{t0+T1} Fl(t)\,dt \;-\; \int_{t0+T1}^{t0+2\cdot T1} Fl(t)\,dt\right) \tag{2}$$

Une variable RC correspond à un paramètre d'intégration, par exemple à une résistance et un condensateur associés à un amplificateur opérationnel dans le cas d'un mode de réalisation analogique. Un instant t0 correspond au début de l'intégration et T1 correspond aux temps d'intégration dans un premier sens et dans un second sens.

A la fin de l'intégration le signal S3 intégré peut s'exprimer par la fonction suivante :

$$F3(t) = \frac{A.Ct}{RC}\cdot\left(-2.e^{-\frac{t0+T1}{Ct}} + e^{-\frac{t0}{Ct}} + e^{-\frac{t0+2\cdot T1}{Ct}}\right) \tag{3}$$

Dans certaines applications nécessitant une grande précision il est avantageux de s'affranchir de la valeur de l'amplitude initiale du signal. Ainsi dans un mode réalisation de l'invention, deux intégrations du signal sur des durées différentes, et commençant sensiblement en même temps permettent de fournir deux signaux d'intégration respectivement S3A et S3B. Pour le signal S3A les durées d'intégrations dans un sens puis dans l'autre sont représentées par une valeur T1, et pour le signal S3B les durées d'intégration dans un sens puis dans l'autre sont représentées par une valeur T2. Dans ce cas, le dispositif de contrôle permet d'extraire la valeur de constante de temps Ct en fonction du rapport entre les valeurs des signaux d'intégration S3A et S3B.

A la fin de l'intégration le signal S3A intégré peut s'exprimer par la fonction suivante :

$$F3a(t) = \frac{A.Ct}{RC} \cdot \left( -2.e^{-\frac{t0+T1}{Ct}} + e^{-\frac{t0}{Ct}} + e^{-\frac{t0+2\cdot T1}{Ct}} \right) \qquad (4)$$

A la fin de l'intégration le signal S3B intégré peut s'exprimer par la fonction suivante :

$$F3b(t) = \frac{A.Ct}{RC} \cdot \left( -2.e^{-\frac{t0+T2}{Ct}} + e^{-\frac{t0}{Ct}} + e^{-\frac{t0+2\cdot T2}{Ct}} \right) \qquad (5)$$

Dans ce cas, T2 correspond aux temps d'intégration dans un premier sens et dans un second sens, T2 étant différent de T1.

Le rapport de S3A sur S3B correspondant F3a(t) / F3b(t) peut s'exprimer par une fonction F4 (Ct) suivante :

$$F4(Ct) = \frac{-2.e^{-\frac{t0+t1}{Ct}} + e^{-\frac{t0}{Ct}} + e^{-\frac{t0+2\cdot T1}{Ct}}}{-2.e^{-\frac{t0+T2}{Ct}} + e^{-\frac{t0}{Ct}} + e^{-\frac{t0+2\cdot T2}{Ct}}} \qquad (6)$$

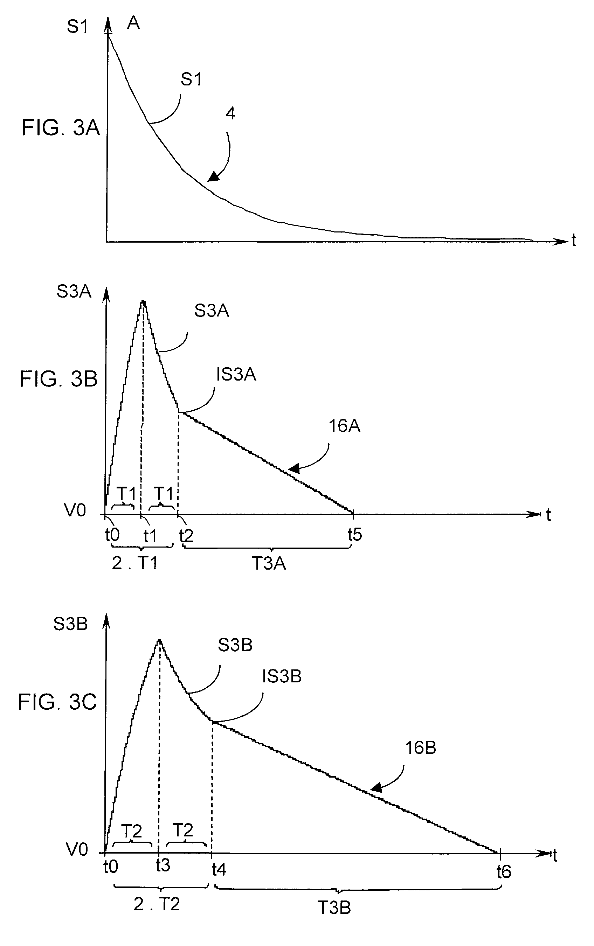

Les figures 3A, 3B et 3C illustrent respectivement la partie décroissante du signal S1 ou S1A et les signaux d'intégration S3A et S3B. Sur la figure 3B le signal S3A représente l'intégration du signal S1 ou S1A dans un premier sens pendant une durée T1 entre un instant t0 de début d'intégration et un instant t1. Puis, entre l'instant t1 et un instant t2, une seconde intégration du signal S1 inversé ou S1I a lieu pendant une seconde durée T1. Ces deux intégrations successives peuvent être représentées par une fonction F2(t) et une valeur IS3A du signal S3A à la fin de l'intégration à l'instant t2 peut être représentée par une fonction F3(t) ou F3a(t). Sur la figure 3C le signal S3B représente l'intégration du signal S1 ou S1A dans un premier sens pendant une durée T2 différente de T1 entre un instant t0 de début d'intégration et un instant t3. Puis, entre l'instant t3 et un instant t4, une seconde intégration du signal S1 inversé ou S1I a lieu pendant une seconde durée T2. Ces deux intégrations successives peuvent être représentées par une fonction F2(t) dans laquelle T1 est remplacée par T2 et une valeur IS3B du signal S3B à la fin de l'intégration à l'instant t4 peut être représentée par une fonction F3b(t).

La comparaison des signaux IS3A et IS3B en fin d'intégration permet de s'affranchir de l'amplitude A du signal S1. Ainsi, même si l'amplitude des impulsions change ou comporte une dérive dans le temps en fonction de variations de caractéristiques de composants électroniques ou de sources de tension ou de courant, la mesure de la constante de temps Ct reste stable dans le temps. Des relations entre la constante de temps Ct et le rapport de signaux IS3A et IS3B peut se faite selon la fonction F4(Ct). Cette relation peut être réalisée par calcul ou par table de correspondance dans une mémoire.

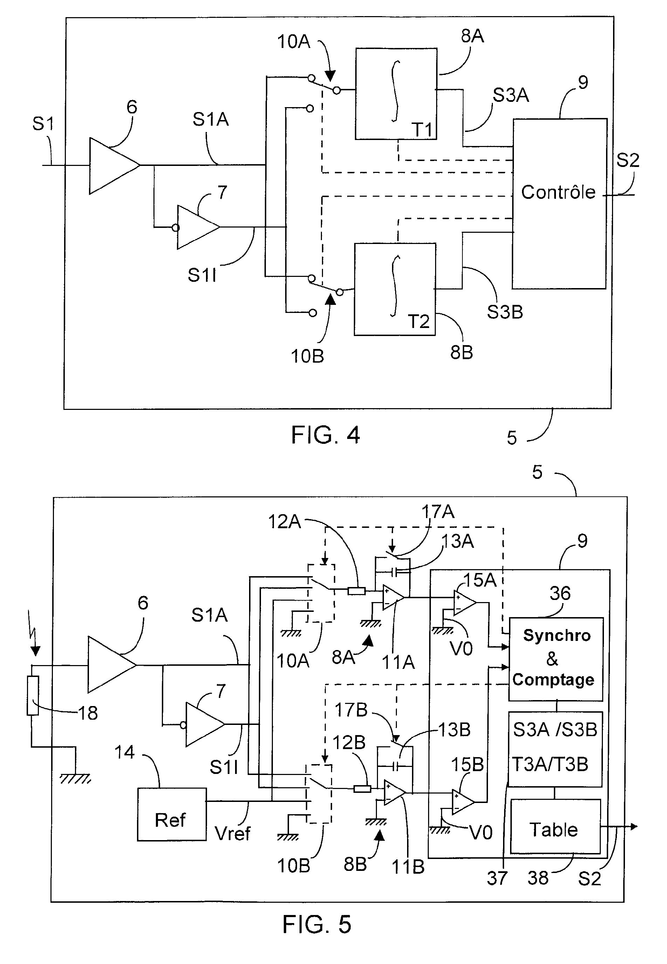

Un mode de réalisation d'un dispositif de traitement 5 avec deux circuits d'intégration est représenté sur la figure 4. Un premier circuit d'intégration 8A associé à un commutateur 10A fournit le premier signal S3A intégré avec des premières durées T1, et un second circuit d'intégration 8B associé à un commutateur 10B fournit le second signal S3B intégré avec des secondes durées T2. Le circuit de contrôle 9 contrôle les différentes intégrations du signal, reçoit les signaux S3A et S3B, et fournit un signal S2 représentatif de la constante de temps Ct du signal d'entrée.

Si les intégrations sont réalisées avec des composants analogiques à circuits RC introduisant des constantes d'intégration, il est possible d'annuler les effets des précisions de ces composants en effectuant une intégration d'un signal de référence Vref. Le point de départ de cette intégration correspondant aux valeurs IS3A et IS3B du ou des signaux S3A et S3B en fin d'intégration aux instants respectivement t2 ou t4. La fin de l'intégration correspond au moment ou le signal d'intégration atteint une valeur de seuil, de préférence une valeur nulle. Sur les figures 3B et 3C, les temps d'intégration, représentés respectivement par T3A entre l'instant t2 et un instant t5, et par T3B entre l'instant t4 et un instant t6, sont alors directement représentatifs des valeurs desdits signaux IS3A et IS3B.

Les constantes RC d'intégration entrant dans l'ensemble des intégrations sont annulées à la fin de l'intégration.

Pour améliorer la précision, la référence Vref peut avantageusement être proportionnelle à l'amplitude A du signal S1.

L'intégration d'un signal de référence Vref peut s'exprimer par une fonction F5(t) suivante :

$$F5(t) = F3(t) + \frac{1}{R.C} \cdot \int_0^{T3} Vref(t)\, dt \qquad (7)$$

Dans cette expression le temps T3 est variable, il dépend d'un seuil de dépassement de l'intégration, par exemple un seuil de valeur nulle. Vref peut être de valeur positive ou négative selon le sens initial de S1.

Si le seuil est égal à zéro, la fonction F5(t) est égale aussi à zéro à des instants t5 et t6. Cela signifie que les deux parties de F5(t) sont de valeurs inversées. Il est alors possible de se baser sur les expressions suivantes pour le signal S2A :

$$\frac{1}{R.C} \cdot Vref.T3 = \frac{A.Ct}{R.C} \cdot \left( -2.e^{-\frac{t0+T1}{Ct}} + e^{-\frac{t0}{Ct}} + e^{-\frac{t0+2\cdot T1}{Ct}} \right) \qquad (8)$$

,

$$T3A = \frac{A.Ct}{Vref} \cdot \left( -2.e^{-\frac{t0+T1}{Ct}} + e^{-\frac{t0}{Ct}} + e^{-\frac{t0+2\cdot T1}{Ct}} \right) \qquad (9)$$

et

$$T3B = \frac{A.Ct}{Vref} \cdot \left( -2.e^{-\frac{t0+T2}{Ct}} + e^{-\frac{t0}{Ct}} + e^{-\frac{t0+2\cdot T2}{Ct}} \right). \qquad (10)$$

Le rapport des signaux S2A et S2B peut être défini par l'expression suivante :

$$T3A = \frac{A.Ct}{Vref}\left(-2.e^{-\frac{t0+T1}{Ct}} + e^{-\frac{t0}{Ct}} + e^{-\frac{t0+2\cdot T1}{Ct}}\right)$$

$$\overline{T3B = \frac{A.Ct}{Vref}\left(-2.e^{-\frac{t0+T2}{Ct}} + e^{-\frac{t0}{Ct}} + e^{-\frac{t0+2\cdot T2}{Ct}}\right)} \qquad (11)$$

Le rapport de S3A sur S3B correspondant T3A / T3B peut s'exprimer par une fonction F4(Ct) suivante :

$$F4(Ct) = \frac{-2.e^{-\frac{t0+T1}{Ct}} + e^{-\frac{t0}{Ct}} + e^{-\frac{t0+2\cdot T1}{Ct}}}{-2.e^{-\frac{t0+T2}{Ct}} + e^{-\frac{t0}{Ct}} + e^{-\frac{t0+2\cdot T2}{Ct}}} \qquad (12)$$

semblable à la fonction F4(Ct) définie plus haut en (6).

La figure 5 montre un mode de réalisation dans lequel des intégrateurs 8A et 8B sont réalisés de manière analogique. Chaque intégrateur comporte un amplificateur 11A et 11B associé respectivement à une résistance d'entrée 12A et 12B et un condensateur 13A et 13B. Les résistances d'entrée des intégrateurs sont connectées à des commutateurs respectivement 10A et 10B pour recevoir les signaux S1A, S1I et un signal Vref de référence fourni par une source de tension de référence 14. Les commutateurs sont commandés pendant des durées différentes.

Par exemple, le commutateur 10A est commandé par un circuit 36 de synchronisation et de comptage du circuit de contrôle 9 pour appliquer sur la résistance d'entrée 12A de l'intégrateur 8A le signal S1A pendant une durée T1, puis le signal S1I pendant une durée T1et en fin le signal Vref pour faire intégrer l'intégrateur jusqu'à une valeur nulle V0 de la sortie d'intégration. Pendant que le commutateur est commandé pour appliquer la valeur de référence Vref, le circuit de contrôle 9 comporte des moyens 36 pour compter le temps d'intégration jusqu'à une valeur nulle V0 de la sortie de l'intégrateur 8A. Un comparateur 15A, connecté à l'intégrateur 8A, détecte le passage à zéro V0 de la sortie d'intégration et informe le circuit 36 du circuit de contrôle 9 pour arrêter le comptage du temps T3A d'intégration.

De la même manière, le commutateur 10B est commandé par le circuit 36 pour appliquer sur la résistance d'entrée 12B de l'intégrateur 8A le signal S1A pendant une durée T2, puis le signal S1I pendant une durée T2 et en fin le signal Vref pour faire intégrer l'intégrateur jusqu'à une valeur nulle V0 de la sortie d'intégration. Pendant que le commutateur est commandé pour appliquer la valeur de référence Vref, le circuit de contrôle 9 comporte des moyens 36 pour compter le temps d'intégration jusqu'à une valeur nulle V0 de la sortie de l'intégrateur 8B. Un comparateur 15B, connecté à l'intégrateur 8B, détecte le passage à zéro V0 de la sortie d'intégration est informe le circuit 36 pour arrêter le comptage du temps T3B d'intégration. Les intégrations de la valeur de référence Vref sont représentées sur des parties 16A et 16B des courbes des figures 3B et 3C. Ces intégrations finales permettent de s'affranchir de la précision des composants des intégrateurs, notamment des résistances 12A et 12B et des condensateurs 13A et 13B. L'utilisation, dans chaque intégrateur, des périodes d'intégrations sensiblement égales en inversant le signal d'entrée permet d'annuler les effets d'un signal de décalage Off.

Avant chaque intégration, les intégrateurs sont initialisés par le circuit de contrôle qui met les entrées à une valeur nulle correspondant à la masse du circuit et décharge les condensateurs 13A et 13B en commandant des dispositifs de décharge 17A et 17B. le signal S2 représentatif de la constante de temps à la décroissance du signal d'entrée S1 peut être déterminer dans le circuit de contrôle en fonction des temps T3A et T3B ou du rapport T3A/T3B entre lesdits temps représentatif du rapport S3A/S3B déterminé dans un circuit 37. La valeur Ct de S2 peut être avantageusement fournie à l'aide d'une table 38 de correspondance recevant les valeurs des rapports T3A/T3B ou S3A/S3B. Cette table est de préférence stockée notamment dans une mémoire électronique. L'utilisation de deux voies d'intégration ayant des durées d'intégration différentes T1 et T2 permet de s'affranchir de la valeur de l'amplitude du signal d'entrée.

Dans un mode réalisation en circuit intégrés ou en circuit hybrides, les circuits d'intégration 8A et 8B peuvent comporter des condensateurs et des résistances ajustées de manière précise, notamment par sérigraphie, par découpage au laser ou au jet de sable. Ces circuits permettent de simplifier avantageusement le circuit de contrôle 9 et d'éviter l'intégration avec une valeur de référence Vref représentée par des parties de courbes 16A et 16B.

Sur la figure 5, des moyens de réception d'un signal lumineux 18 sont connectés à l'amplificateur 6. Ces moyens de réception peuvent recevoir des signaux lumineux fournis par un capteur à matériaux fluorescent ou luminescent ayant une décroissance sensiblement exponentielle après excitation par un rayonnement lumineux. La décroissance exponentielle du signal lumineux fourni par le capteur à matériaux fluorescent ou luminescent peut être représentative d'une température à mesurer.

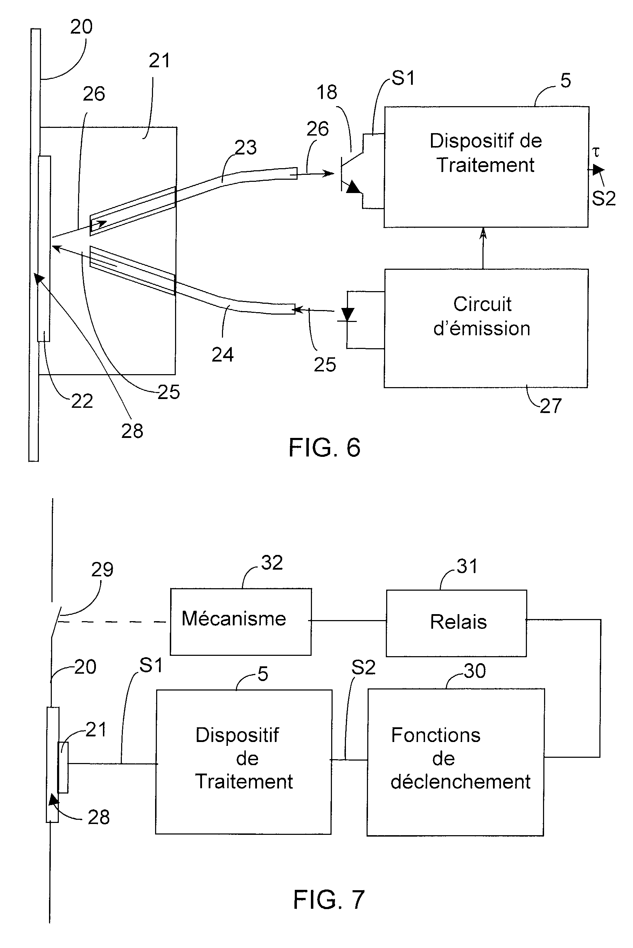

Un appareil électrique, selon un mode de réalisation de la figure 6, comporte un conducteur électrique 20 sur lequel est disposé un capteur 21 à matériaux 22 fluorescent ou luminescent. Le capteur 21 comporte, par exemple, deux conduits optiques tels que des fibres optiques 23 et 24 pour diriger un premier faisceau lumineux 25 d'excitation vers le matériau 22 et pour récupérer un second faisceau lumineux 26 provenant du matériau 22 et dirigé vers les moyens de réception 18. Le premier faisceau peut être émis par un circuit d'émission 27 synchronisé par exemple avec le dispositif de traitement 5. Le signal du second faisceau provient du matériau 22 qui réagit à l'excitation du premier faisceau. Dans ce mode de réalisation, la réaction du matériau 22 est dépendante de la température qui modifie la constante de temps à la décroissance du signal. Puisque le matériau 22 agit en fonction de la température, la disposition d'un tel matériau 22 sur un conducteur électrique 20 permet de mesurer sa température ou son échauffement lorsqu'il est parcouru par un courant électrique. Pour améliorer la mesure des effets du courant électrique sur le matériau 22, le matériau fluorescent ou luminescent du capteur est de préférence disposé sur une partie 28 du conducteur ayant une forme de shunt électrique.

La figure 7 représente un appareil électrique comportant au moins un contact électrique 29 connecté en série avec au moins un conducteur électrique 20. Un capteur 21 est disposé sur une partie 28 du conducteur ayant une forme de shunt pour fournir un signal S1 dont la partie de forme exponentielle décroissante est représentative de la température détectée par le capteur. Par exemple, le capteur peut détecter la température du conducteur dans la partie en forme de shunt électrique susceptible de s'échauffer par le passage d'un courant électrique. Un dispositif de traitement 5 est connecté au capteur 21 pour recevoir le signal S1 et fournir un signal S2 de sortie représentatif de la constante de temps des impulsions du signal S1 et par conséquent représentatif de la température du conducteur 20 et du courant qui le traverse. Un circuit de traitement 30 de fonctions de déclenchement est connecté en sortie du dispositif de traitement 5 pour recevoir le signal S2. Le circuit 30 traite les fonctions de déclenchement et fournit un ordre de déclenchement à un relais 31 de déclenchement pour provoquer l'ouverture du contact 29 par un mécanisme 32. Par exemple, si le signal S2 dépasse un seuil prédéterminé, instantanément ou pendant une durée prédéterminée, le circuit de traitement 30 donne un ordre de déclenchement pour ouvrir ledit au moins un contact 29.

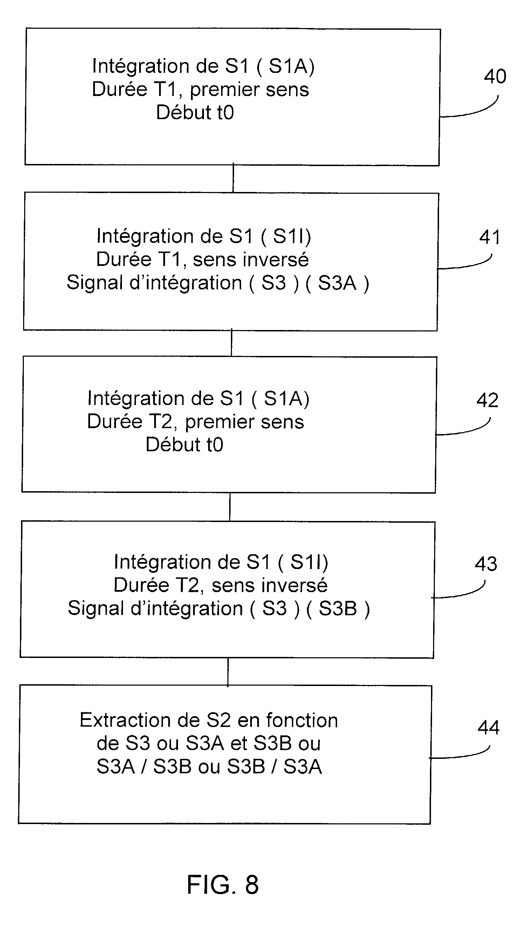

Un organigramme d'un procédé de traitement est représenté sur la figure 8. Ce procédé de traitement d'un signal comporte une phase de détermination pour fournir une valeur représentative d'une constante de temps d'une partie d'un signal d'entrée S1 ou S1A ayant une forme sensiblement exponentielle. Ladite phase de détermination comporte une première étape d'intégration 40 du signal S1 ou S1A d'entrée dans un premier sens pendant une première durée prédéterminée T1 commençant à un instant t0, et une seconde étape 41 d'intégration du signal d'entrée S1 ou S1I dans un second sens inversé par rapport au premier sens pendant une seconde durée prédéterminée T1 sensiblement égale à la première durée et succédant à la dite première durée. Si le procédé a une seule voie d'intégration une étape 44 d'extraction fournit une valeur S2 ou Ct représentative de la constante de temps en fonction d'un signal S3 intégré par les étapes 40 et 41 d'intégration.

De préférence, le procédé comporte deux voies d'intégration pour s'affranchir de l'amplitude du signal S1. Dans ce mode réalisation, la phase de détermination comporte une troisième étape 42 d'intégration du signal d'entrée S1 ou S1A dans un premier sens pendant une troisième durée T2 prédéterminée différente de la première durée T1 et commençant sensiblement au même instant t0 que ladite première étape 40, et une quatrième étape 43 d'intégration du signal d'entrée S1 ou S1I dans un second sens inversé par rapport au premier sens pendant une quatrième durée T2 prédéterminée sensiblement égale à la troisième durée et succédant à la dite troisième étape. Dans ce procédé, l'étape d'extraction fournit la valeur S2 ou Ct représentative d'une constante de temps en fonction d'un signal S3A intégré par la première et la seconde étapes d'intégration 40 et 41, et d'un signal S3B intégré par la troisième et la quatrième étape d'intégration 42 et 43.

Avantageusement, l'étape d'extraction 44 fournit la valeur S2 ou Ct représentative d'une constante de temps en fonction du rapport S3A/S3B ou S3B/S3A entre le signal S3A intégré par la première et la seconde étape d'intégration et le signal S3B intégré par la troisième et la quatrième étape d'intégration.

Le dispositif et le procédé décrits ci-dessus peuvent être mis en oeuvre dans des modes de réalisation comportant notamment des composants analogiques, numériques et/ou programmés dans un microcontrôleur ou pour un microprocesseur.

**Revendications**

**1.** Dispositif de traitement d'un signal comportant des moyens de détermination pour fournir un signal (S2) de sortie ayant une valeur représentative d'une constante de temps (Ct) d'une partie d'un signal (S1) d'entrée ayant une forme (4) sensiblement exponentielle, dispositif **caractérisé en ce que** les moyens de détermination comportent :

- des premiers moyens (8, 8A, 40, 41) d'intégration pour fournir un premier signal (S3, S3A) d'intégration représentatif de l'intégration du signal d'entrée (S1, S1A) dans un premier sens pendant une première durée (T1) prédéterminée et de l'intégration du signal d'entrée (S1, S1I) dans un second sens inversé par rapport au premier sens pendant une seconde durée (T1) prédéterminée succédant à la première durée et de valeur sensiblement égale à ladite première durée, et
- des moyens (9, 44) d'extraction connectés aux premiers moyens (8, 8A) d'intégration pour fournir en fonction du premier signal (S3, S3A) d'intégration le signal (S2) de sortie ayant la valeur représentative d'une constante de temps (Ct) d'une partie d'un signal (S1) ayant une forme (4) sensiblement exponentielle.

2. Dispositif de traitement selon la revendication 1 **caractérisé en ce que** les moyens de détermination comportent des seconds moyens (8B, 42, 43) d'intégration pour fournir un second signal d'intégration (S3B) représentatif de l'intégration du signal d'entrée (S1, S1A) dans un premier sens pendant une troisième durée (T2) prédéterminée différente de la première durée (T1) et commençant sensiblement en même temps (t0), et de l'intégration du signal d'entrée (S1, S1I) dans un second sens inversé par rapport au premier sens pendant une quatrième durée (T2) prédéterminée succédant à la troisième durée et de valeur sensiblement égale à ladite troisième durée (T2), les moyens d'extraction (9) étant connectés aux premiers moyens (8A) d'intégration et aux seconds moyens (8B) d'intégration pour fournir ledit signal de sortie (S2) en fonction du premier signal (S3A) d'intégration et du second signal (S3B) d'intégration.

3. Dispositif de traitement selon la revendication 2 **caractérisé en ce que** le premier signal (S3A) d'intégration et/ou le second signal (S3B) d'intégration sont déterminés par au moins une durée (T3A, T3B) d'intégration d'un signal (Vref) de référence entre au moins une des valeurs du premier et/ou du second des signaux (S3A, S3B) d'intégration après l'intégration pendant une seconde durée ou une quatrième durée et une valeur de référence (V0) déclenchant une fin d'intégration.

4. Dispositif de traitement selon l'une des revendications 2 ou 3 **caractérisé en ce que** les moyens d'extraction comportent des moyens (9, 37) pour déterminer le rapport entre le premier signal d'intégration (S3A) et le second signal d'intégration (S3B), la valeur du signal (S2) de sortie étant déterminée en fonction dudit rapport.

5. Dispositif de traitement selon la revendication 4 **caractérisé en ce que** les moyens d'extraction comportent une table (38) de valeurs pour attribuer des valeurs du signal de sortie en fonction d'un rapport (S3A/S3B, T3A/T3B) entre le premier signal d'intégration et le second signal d'intégration.

6. Dispositif de traitement selon l'une quelconque des revendications 1 à 5 **caractérisé en ce que** les moyens de détermination comportent des moyens (10, 10A, 10B) de commutation pour commuter au moins une entrée des moyens d'intégration entre un signal (S1, S1A) d'entrée, un signal (S1I) d'entrée inversé, et un signal de référence (Vref).

7. Dispositif de traitement selon l'une quelconque des revendications 1 à 6 **caractérisé en ce qu'**il comporte des moyens (6) d'amplification pour recevoir un signal (S1) de mesure et pour fournir le signal (S1A) d'entrée aux moyens de détermination.

8. Dispositif de traitement selon la revendication 7 **caractérisé en ce qu'**il comporte des moyens (18) de réception d'un signal lumineux (26) connectés aux moyens (6) d'amplification, le signal lumineux étant fourni par un capteur (21) à matériau (22) fluorescent ou luminescent.

9. Dispositif de traitement selon la revendication 8 **caractérisé en ce que** le signal lumineux (26) fourni par un capteur (21) à matériau fluorescent ou luminescent est un signal représentatif d'une température.

10. Appareil électrique comportant au moins un conducteur électrique (20) et au moins un capteur (21) de température à matériau fluorescent ou luminescent disposé à proximité dudit conducteur électrique **caractérisé en ce qu'**il comporte un dispositif de traitement (5) selon l'une des revendications 1 à 9 connecté audit capteur (21) de température.

11. Appareil électrique selon la revendication 10 **caractérisé en ce que** une partie (28) dudit au moins un conducteur électrique (20) est réalisée en forme de shunt électrique et **en ce que** le matériau (22) fluorescent ou luminescent du capteur est disposé sur la partie (28) du conducteur en forme de shunt électrique.

12. Appareil électrique selon l'une des revendications 10 ou 11 **caractérisé en ce qu'**il comporte :

   - au moins un contact électrique (29) en série avec ledit au moins un conducteur électrique (20), et
   - des moyens (30) de traitement de fonctions de déclenchement connectés en sortie du dispositif de traitement pour recevoir un signal (S2) de sortie ayant une valeur (Ct) représentative d'une constante de temps, et connectés à un relais de déclenchement (31) pour commander l'ouverture desdits contacts.

13. Appareil électrique selon la revendication 12 **caractérisé en ce que** ledit appareil est un disjoncteur électrique.

14. Procédé de traitement d'un signal comportant une phase de détermination pour fournir une valeur (Ct, S2) représentative d'une constante de temps d'une partie d'un signal d'entrée ayant une forme sensiblement exponentielle, **caractérisé en ce que** la phase de détermination comporte :

   - une première étape (40) d'intégration du signal (S1, S1A) d'entrée dans un premier sens pendant une première durée (T1) prédéterminée,
   - une seconde étape (41) d'intégration du signal (S1, S1I) d'entrée dans un second sens inversé par rapport au premier sens pendant une seconde durée (T1) prédéterminée sensiblement égale à la première durée et succédant à la dite première étape, et
   - une étape (44) d'extraction pour fournir la valeur (Ct, S2) représentative d'une constante de temps en fonction d'un signal (S3, S3A) intégré par la première et la seconde étape d'intégration.

15. Procédé de traitement selon la revendication 14 **caractérisé en ce que** la phase de détermination comporte :

   - une troisième étape (42) d'intégration du signal (S1, S1A) d'entrée dans un premier sens pendant une troisième durée (T2) prédéterminée différente de la première durée (T1) et commençant sensiblement en même temps (t0) que ladite première étape,
   - une quatrième étape (43) d'intégration du signal d'entrée (S1, S1I) dans un second sens inversé par rapport au premier sens pendant une quatrième durée (T2) prédéterminée sensiblement égale à 1a troisième durée et succédant à la dite troisième étape,

   l'étape d'extraction (44) fournissant la valeur (Ct, S2) représentative d'une constante de temps en fonction du signal (S3A) intégré par la première et la seconde étape d'intégration et du signal (S3B) intégré par la troisième et la quatrième étape d'intégration.

16. Procédé de traitement selon la revendication 15 **caractérisé en ce que** l'étape d'extraction (44) fournit la valeur (Ct, S2) représentative d'une constante de temps en fonction d'un rapport (S3A/S3B) entre le signal (S3A) intégré par la première et la seconde étape d'intégration et le signal (S3B) intégré par la troisième et la quatrième étape d'intégration.

**FIG. 1**

**FIG. 2**

FIG. 3A

S1

A

S1

4

t

FIG. 3B

S3A

S3A

IS3A

16A

V0

T1 | T1

t0 | t1 | t2 | t5

2 . T1

T3A

FIG. 3C

S3B

S3B

IS3B

16B

V0

T2 | T2

t0 | t3 | t4 | t6

2 . T2

T3B

FIG. 4

FIG. 5

FIG. 6

FIG. 7

Intégration de S1 ( S1A)
Durée T1, premier sens
Début t0 — 40

Intégration de S1 ( S1I)
Durée T1, sens inversé
Signal d'intégration ( S3 ) ( S3A ) — 41

Intégration de S1 ( S1A)
Durée T2, premier sens
Début t0 — 42

Intégration de S1 ( S1I)
Durée T2, sens inversé
Signal d'intégration ( S3 ) ( S3B ) — 43

Extraction de S2 en fonction
de S3 ou S3A et S3B ou
S3A / S3B ou S3B / S3A — 44

FIG. 8

**Office européen
des brevets**

# RAPPORT DE RECHERCHE EUROPEENNE

Numéro de la demande

EP 01 41 0123

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 043 585 A (FEHRENBACH GUSTAV ET AL) 27 août 1991 (1991-08-27) * colonne 9, ligne 41 - ligne 60; figures 4,8 * | 1,2,14 | G01K11/20 |
| A | WO 92 07240 A (ROSEMOUNT INC) 30 avril 1992 (1992-04-30) * page 8, ligne 7 - page 13, ligne 2; figure 3 * | 1,14 | |
| A | EP 0 940 655 A (SCHNEIDER ELECTRIC IND SA) 8 septembre 1999 (1999-09-08) * abrégé; figures * | 1,8-14 | |

DOMAINES TECHNIQUES RECHERCHES (Int.Cl.7)

G01K

Le présent rapport a été établi pour toutes les revendications

| Lieu de la recherche | Date d'achèvement de la recherche | Examinateur |
|---|---|---|
| LA HAYE | 23 mai 2002 | Ramboer, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**      EP 01 41 0123

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

23-05-2002

| Document brevet cité au rapport de recherche | | Date de publication | Membre(s) de la famille de brevet(s) | | Date de publication |
|---|---|---|---|---|---|
| US 5043585 | A | 27-08-1991 | AUCUN | | |
| WO 9207240 | A | 30-04-1992 | US | 5211480 A | 18-05-1993 |
| | | | US | 5140609 A | 18-08-1992 |
| | | | BR | 9107050 A | 21-09-1993 |
| | | | EP | 0553261 A1 | 04-08-1993 |
| | | | IL | 99595 A | 24-06-1994 |
| | | | JP | 6502246 T | 10-03-1994 |
| | | | WO | 9207240 A1 | 30-04-1992 |
| | | | US | 5255980 A | 26-10-1993 |
| EP 0940655 | A | 08-09-1999 | FR | 2775774 A1 | 10-09-1999 |
| | | | CN | 1234513 A | 10-11-1999 |
| | | | EP | 0940655 A1 | 08-09-1999 |
| | | | JP | 2000205968 A | 28-07-2000 |
| | | | US | 6204915 B1 | 20-03-2001 |

EPO FORM P0460

Pour tout renseignement concernant cette annexe : voir Journal Officiel de l'Office européen des brevets, No.12/82